# EUROPEAN PATENT APPLICATION

(11) **EP 4 730 904 A1**
(43) Date of publication of application: **22.04.2026**
(21) Application number: 24857890.8
(22) Date of filing: 29.05.2024
(51) Int. Cl.: H04W 76/19, H04W 4/80

(54) **BLUETOOTH COMMUNICATION SYSTEM, RECONNECTION METHOD, BLUETOOTH DEVICE, STORAGE MEDIUM, AND CHIP**

(30) Priority: 29.08.2023 CN 202311103578; 06.09.2023 CN 202311161653
(71) Applicant: Huawei Technologies Co., Ltd., Shenzhen, Guangdong 518129 (CN)
(72) Inventor: LIN, Jianxin, Shenzhen, Guangdong 518129 (CN); XIONG, Yong, Shenzhen, Guangdong 518129 (CN); ZHENG, Fei, Shenzhen, Guangdong 518129 (CN); ZENG, Yingzhen, Shenzhen, Guangdong 518129 (CN); LIAN, Xiang, Shenzhen, Guangdong 518129 (CN)
(74) Representative: Isarpatent
(86) International application number: PCT/CN2024/096179
(87) International publication number: WO 2025/044345

(57) **Abstract**

Embodiments of this application provide a Bluetooth communication system, a reconnection method, a Bluetooth device, a storage medium, and a chip, and relate to the field of communication technologies. The system includes a first Bluetooth device and a second Bluetooth device that have been paired. The first Bluetooth device is configured to: send indication information via Bluetooth low energy, and send a page message via classic Bluetooth, where the indication information is used to indicate the second Bluetooth device to increase a scanning duty cycle of classic Bluetooth, and the page message is used to request to reconnect to the second Bluetooth device. The second Bluetooth device is configured to: perform scanning via Bluetooth low energy, and perform scanning via classic Bluetooth at a first duty cycle; after obtaining the indication information through scanning via Bluetooth low energy, control scanning via classic Bluetooth at a second duty cycle, where the second duty cycle is greater than the first duty cycle; and after obtaining the page message through scanning via classic Bluetooth, establish a first Bluetooth connection to the first Bluetooth device. According to the technical solutions provided in this application, a Bluetooth reconnection speed can be increased, and user experience is better.

## Description

This application claims priorities to Chinese Patent Application No. 202311103578.5, filed with the China National Intellectual Property Administration on August 29, 2023 and entitled "BLUETOOTH COMMUNICATION SYSTEM, RECONNECTION METHOD, BLUETOOTH DEVICE, STORAGE MEDIUM, AND CHIP", and to Chinese Patent Application No. 202311161653.3, filed with the China National Intellectual Property Administration on September 6, 2023 and entitled "BLUETOOTH COMMUNICATION SYSTEM, RECONNECTION METHOD, BLUETOOTH DEVICE, STORAGE MEDIUM, AND CHIP", both of which are incorporated herein by reference in their entireties.

### TECHNICAL FIELD

This application relates to the field of communication technologies, and in particular, to a Bluetooth communication system, a reconnection method, a Bluetooth device, a storage medium, and a chip.

### BACKGROUND

Bluetooth is a mature short-range wireless communication technology currently, and is widely used in various Bluetooth devices, such as Bluetooth earphones and mobile phones. Bluetooth includes classic Bluetooth and Bluetooth low energy. Currently, after a Bluetooth function is enabled, two paired Bluetooth devices can be directly reconnected via classic Bluetooth without pairing. For example, after being powered on, Bluetooth earphones can be directly connected to a recently connected electronic device like a mobile phone. However, a reconnection speed is low in a reconnection process of the Bluetooth devices, affecting user experience.

### SUMMARY

This application provides a Bluetooth communication system, a reconnection method, a Bluetooth device, a storage medium, and a chip, to resolve a problem in the conventional technology, where a Bluetooth reconnection speed is low, affecting user experience, affecting user experience.

To achieve the foregoing objective, the following technical solutions are used in this application.

According to a first aspect, this application provides a Bluetooth communication system. The system includes a first Bluetooth device and a second Bluetooth device that have been paired. The first Bluetooth device is configured to: send indication information via Bluetooth low energy, and send a page message via classic Bluetooth. The indication information is used to indicate the second Bluetooth device to increase a scanning duty cycle of classic Bluetooth, and the page message is used to request to reconnect to the second Bluetooth device. The second Bluetooth device is configured to: perform scanning via Bluetooth low energy, and perform scanning via classic Bluetooth at a first duty cycle; after obtaining the indication information through scanning via Bluetooth low energy, control scanning via classic Bluetooth at a second duty cycle, where the second duty cycle is greater than the first duty cycle; and after obtaining the page message through scanning via classic Bluetooth, establish a first Bluetooth connection to the first Bluetooth device.

In the Bluetooth communication system provided in this application, when reconnecting to the second Bluetooth device, the first Bluetooth device can quickly indicate, via Bluetooth low energy, the second Bluetooth device to increase the scanning duty cycle of classic Bluetooth, to increase a rate at which the second Bluetooth device scans information in a classic Bluetooth reconnection process. This increases a reconnection speed and improves user experience.

In some embodiments, that the first Bluetooth device is configured to: send the indication information via Bluetooth low energy, and send the page message via classic Bluetooth includes: sending the indication information via Bluetooth low energy within preset time in response to a first event; and sending the page message via classic Bluetooth after the preset time expires or response information is received, where the response information indicates that the second Bluetooth device has received the indication information. In embodiments, the first Bluetooth device first quickly indicates, via Bluetooth low energy, the second Bluetooth device to increase the scanning duty cycle of classic Bluetooth, and then pages and connects to the second Bluetooth device via classic Bluetooth, to independently implement a fast reconnection by using one Bluetooth module. The Bluetooth module supports both classic Bluetooth and Bluetooth low energy.

It should be noted that, in comparison with a conventional reconnection process, in this reconnection process, the first Bluetooth device additionally performs the process of "indicating, via Bluetooth low energy, the second Bluetooth device to increase the scanning duty cycle of classic Bluetooth", and reconnection time consumption is increased in this step. However, after the second Bluetooth device increases the scanning duty cycle of classic Bluetooth, reconnection time consumption can be significantly reduced in a plurality of interaction processes between the second Bluetooth device and the first Bluetooth device during reconnection. Therefore, from a perspective of overall effect, the method provided in this embodiment can be used to increase a reconnection speed of the Bluetooth devices to some extent.

In some embodiments, the first Bluetooth device includes a first Bluetooth module and a second Bluetooth module, and that the first Bluetooth device is configured to: send the indication information via Bluetooth low energy, and send the page message via classic Bluetooth includes:
the first Bluetooth module is configured to send the page message via classic Bluetooth; and
the second Bluetooth module is configured to send the indication information via Bluetooth low energy.

In embodiments, the first Bluetooth device reconnects to the second Bluetooth device with cooperation of the first Bluetooth module and the second Bluetooth module. In addition, in this process, the process in which the first Bluetooth device indicates, via Bluetooth low energy, the second Bluetooth device to increase the scanning duty cycle of classic Bluetooth and the process in which the first Bluetooth device reconnects to the second Bluetooth device via classic Bluetooth are performed in parallel, and the two processes do not affect each other. After the second Bluetooth device increases the scanning duty cycle of classic Bluetooth, the second Bluetooth device can scan, via classic Bluetooth, the page message sent by the first Bluetooth device at high efficiency. This increases a reconnection speed of classic Bluetooth.

In some embodiments, the first Bluetooth module and the second Bluetooth module are further configured to establish a second Bluetooth connection between the first Bluetooth module and the second Bluetooth module in response to a first event. The Bluetooth connection is usually a classic Bluetooth connection, or certainly may be a Bluetooth low energy connection. This is not limited in embodiments.

In some embodiments, the first Bluetooth module is further configured to indicate, through the second Bluetooth connection, the second Bluetooth module to send the indication information.

It should be noted that the first Bluetooth module may alternatively send the indication information by default without an indication of the first Bluetooth module; or the first Bluetooth module may be connected to the second Bluetooth module in a wired manner, and indicate, through the wired connection, the second Bluetooth module to send the indication information. This is not limited in embodiments.

In some embodiments, the first Bluetooth device is true wireless stereo TWS earphones, the TWS earphones include a primary earphone and a secondary earphone, the primary earphone includes the first Bluetooth module, and the secondary earphone includes the second Bluetooth module.

In some embodiments, the first event is: successfully enabling a Bluetooth function of the first Bluetooth device. For example, the second Bluetooth device is powered on and automatically enables the Bluetooth function, or the first Bluetooth device enables the Bluetooth function based on an operation performed by a user on a Bluetooth control.

In some embodiments, the first event is: after the Bluetooth connection between the first Bluetooth device and the second Bluetooth device is disconnected, determining that the Bluetooth connection needs to be re-established. For example, the first Bluetooth device and the second Bluetooth device are automatically disconnected because a Bluetooth signal is less than a threshold due to a long distance between the first Bluetooth device and the second Bluetooth device. In this case, the first Bluetooth device determines that the connection needs to be re-established.

In some embodiments, the second Bluetooth device is further configured to: after successfully establishing the first Bluetooth connection, resume scanning via classic Bluetooth of the second Bluetooth device at the first duty cycle, to reduce power consumption of the second Bluetooth device.

In some embodiments, the second duty cycle is 11.25 ms/37.5 ms, where 11.25 ms is a scan time window, and 37.5 ms is a scan time interval. Certainly, the second duty cycle may alternatively be other data. This is not limited in embodiments.

According to a second aspect, this application provides a Bluetooth device reconnection method, applied to a first Bluetooth device and a second Bluetooth device that have been paired. The method includes: The first Bluetooth device sends indication information via Bluetooth low energy, and sends a page message via classic Bluetooth, where the indication information is used to indicate the second Bluetooth device to increase a scanning duty cycle of classic Bluetooth, and the page message is used to request to reconnect to the second Bluetooth device; the second Bluetooth device performs scanning via Bluetooth low energy, and performs scanning via classic Bluetooth at a first duty cycle; after obtaining the indication information through scanning via Bluetooth low energy, the second Bluetooth device controls scanning via classic Bluetooth at a second duty cycle, where the second duty cycle is greater than the first duty cycle; and after obtaining the paging message through scanning via classic Bluetooth, the second Bluetooth device establishes a first Bluetooth connection to the first Bluetooth device.

In some embodiments, that the first Bluetooth device sends the indication information via Bluetooth low energy, and sends the page message via classic Bluetooth includes: The first Bluetooth device sends the indication information via Bluetooth low energy within preset time in response to a first event; and the first Bluetooth device sends the page message via classic Bluetooth after the preset time expires or response information is received, where the response information indicates that the second Bluetooth device has received the indication information.

In some embodiments, the first Bluetooth device includes a first Bluetooth module and a second Bluetooth module. Correspondingly, that the first Bluetooth device sends the indication information via Bluetooth low energy and sends the page message via classic Bluetooth includes: The first Bluetooth module sends the page message via classic Bluetooth; and the second Bluetooth module sends the indication information via Bluetooth low energy.

In some embodiments, the method further includes: establishing a second Bluetooth connection between the first Bluetooth module and the second Bluetooth module in response to a first event.

In some embodiments, through the second Bluetooth connection, the method further includes: The first Bluetooth module indicates, through the second Bluetooth connection, the second Bluetooth module to send the indication information.

In some embodiments, the first Bluetooth device is true wireless stereo TWS earphones, the TWS earphones include a primary earphone and a secondary earphone, the primary earphone includes the first Bluetooth module, and the secondary earphone includes the second Bluetooth module.

In some embodiments, the first event is: successfully enabling a Bluetooth function of the first Bluetooth device; or after the Bluetooth connection between the first Bluetooth device and the second Bluetooth device is disconnected, determining that the Bluetooth connection needs to be re-established.

In some embodiments, the method further includes: after successfully establishing the first Bluetooth connection to the first Bluetooth device, the second Bluetooth device resumes scanning via classic Bluetooth at the first duty cycle, to reduce power consumption of the device.

In some embodiments, the second duty cycle is 11.25 ms/37.5 ms, where 11.25 ms is a scan time window, and 37.5 ms is a scan time interval.

According to a third aspect, this application provides a Bluetooth device, including a memory, a processor, and a computer program that is stored in the memory and that is runnable on the processor. When the processor executes the computer program, the method performed by the first Bluetooth device or the second Bluetooth device according to the second aspect and embodiments of the second aspect is implemented.

According to a fourth aspect, this application provides a computer-readable storage medium. The computer-readable storage medium stores a computer program. When the computer program is executed by a processor, the method performed by the first Bluetooth device or the second Bluetooth device according to the second aspect and embodiments of the second aspect is implemented.

According to a fifth aspect, this application provides a chip. The chip includes a processor and a memory. The memory stores a computer program. When the computer program is executed by the processor, the method performed by the first Bluetooth device or the second Bluetooth device according to the second aspect and embodiments of the second aspect is implemented.

It may be understood that, for beneficial effect of the second aspect to the fifth aspect, refer to related descriptions in the first aspect. Details are not described herein again.

### BRIEF DESCRIPTION OF DRAWINGS

FIG. 1 is a diagram of a structure of TWS earphones according to an embodiment of this application;
FIG. 2 is a diagram of a structure of a terminal device according to an embodiment of this application;
FIG. 3 is a diagram of a structure of a Bluetooth communication system according to an embodiment of this application;
FIG. 4A is a diagram of an application scenario of a Bluetooth communication system according to an embodiment of this application;
FIG. 4B is a diagram of an application scenario of a Bluetooth communication system according to another embodiment of this application;
FIG. 5 is a diagram of an application scenario of a Bluetooth communication system according to still another embodiment of this application;
FIG. 6 is a diagram of a Bluetooth device reconnection process according to an embodiment of this application;
FIG. 7 is a working flowchart of a Bluetooth communication system according to an embodiment of this application;
FIG. 8 is a flowchart of a Bluetooth device reconnection method according to an embodiment of this application;
FIG. 9 is a flowchart of a Bluetooth device reconnection method according to another embodiment of this application;
FIG. 10 is a flowchart of a Bluetooth device reconnection method according to still another embodiment of this application; and
FIG. 11 is a diagram of a structure of a chip according to an embodiment of this application.

### DESCRIPTION OF EMBODIMENTS

The following describes technical solutions provided in embodiments of this application with reference to the accompanying drawings.

It should be understood that, in descriptions of embodiments of this application, unless otherwise specified, "/" means "or". For example, A/B may indicate A or B. In this specification, "and/or" describes only an association relationship between associated objects and indicates that three relationships may exist. For example, A and/or B may indicate the following three cases: Only A exists, both A and B exist, and only B exists.

Terms "first" and "second" in embodiments are merely intended for a purpose of description, and shall not be understood as an indication or implication of relative importance or an implicit indication of a quantity of indicated technical features. Therefore, a feature limited by "first" or "second" may explicitly or implicitly include one or more features. In the descriptions in embodiments, unless otherwise specified, "a plurality of" means two or more.

Bluetooth is a wireless short-range communication technology in which an electromagnetic wave is received and sent by using a band (usually about 2.4 GHz to 2.485 GHz) of a specific frequency, to implement communication between electronic devices. Currently, Bluetooth includes classic Bluetooth (classic Bluetooth, BT) and Bluetooth low energy (Bluetooth low energy, BLE). Classic Bluetooth and Bluetooth low energy are separately described in detail below.

### (1) Classic Bluetooth

Classic Bluetooth BT is also referred to as a Bluetooth basic rate (BR)/enhanced data rate (EDR), and is generally Bluetooth whose version is earlier than 3.0. BT has a high data transmission rate, but has problems such as high power consumption and a short maximum transmission distance (for example, about 10 meters). In this case, BT is usually used for performing large data transmission within a short range, for example, used by a mobile phone to transmit an audio to Bluetooth earphones, or used by a tablet computer to transmit an audio to a Bluetooth speaker.

As shown in Table 1, BT has 79 channels, and these channels are not classified into advertising channels and data channels. In other words, each channel of BT can be used to send an advertising message and transmit data. A channel of Bluetooth may be understood as a frequency range used by a Bluetooth signal in a transmission process, and different channels correspond to different frequency ranges. In addition, BT usually uses each channel in a frequency hopping spread spectrum (frequency hopping spread spectrum, FHSS) communication manner. FHSS means that spectrum is spread by controlling a carrier frequency to continuously hop. BT divides an entire Bluetooth bandwidth into the foregoing 79 channels based on FHSS. A sender and a receiver of the Bluetooth signal switch to another channel after working on one channel for a period of time.

### (2) Bluetooth low energy

Bluetooth low energy (BLE) is generally Bluetooth whose version is 4.0 and later than 4.0. BLE consumes less power and has a long maximum transmission distance (about 50 meters), but has a low data transmission rate. In this case, BLE is usually used in electronic devices that require low power consumption but do not require large data transmission, such as a mouse, a keyboard, a blood pressure meter, and a temperature sensor. Alternatively, BLE is used to assist BT in working. For example, in a process in which an electronic device establishes a Bluetooth connection, BLE assists BT in device discovery and the like.

As shown in Table 1, BLE has 40 channels, including three advertising channels and 37 data channels. The advertising channel is specifically used to transmit an advertising message, and the data channel is specifically used to transmit data (such as audios, pictures, and files). In addition, same as BT, BLE also uses each channel in the FHSS manner. For details, refer to the foregoing descriptions. Details are not described herein again.

**Table 1 Bluetooth channel**

| Bluetooth | BT | BLE |
|---|---|---|
| Channel | 79 channels (not classified into advertising channels and data channels) | 40 channels (three advertising channels and 37 data channels) |
| Channel usage manner | FHSS | FHSS |

Bluetooth is widely used in various electronic devices due to features such as low power consumption, low costs, convenience, flexibility and security, and a small hardware size. For ease of description, in embodiments, electronic devices configured with Bluetooth are collectively referred to as Bluetooth devices. In addition, the Bluetooth devices are classified into a BT single-mode device, a BLE single-mode device, and a BT&BLE dual-mode device based on different Bluetooth technologies supported by the Bluetooth devices. The BT single-mode device supports only classic Bluetooth, the BLE single-mode device supports only Bluetooth low energy, and the BT&BLE dual-mode device supports both classic Bluetooth and Bluetooth low energy.

In embodiments, the Bluetooth devices include Bluetooth earphones and a terminal device. The terminal device may be a mobile phone (mobile phone), a tablet computer (Pad), a smart home device (for example, a smart television, a smart speaker, a robotic vacuum cleaner, or an air conditioner), a computer, a smart television, a projector, a wearable device (for example, a smart watch), a vehicle-mounted device, an augmented reality (augmented reality, AR)/virtual reality (virtual reality, VR) device, an ultra-mobile personal computer (ultra-mobile personal computer, UMPC), a netbook, a personal digital assistant (personal digital assistant, PDA), or the like. The Bluetooth earphones may be true wireless stereo (true wireless stereo, TWS) earphones, neckband earphones, or the like. A specific type of the Bluetooth device is not limited in embodiments of this application.

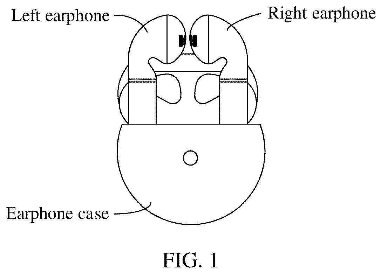

FIG. 1 is a diagram of a structure of TWS earphones according to an embodiment of this application. As shown in FIG. 1, the TWS earphones include a left earphone, a right earphone, and an earphone case. The left earphone and the right earphone are usually placed in the earphone case. When a user needs to use the Bluetooth earphones, the user may take out the left earphone and/or the right earphone from the earphone case for use.

The left earphone and the right earphone each include an outer housing and an internal component. The internal component is disposed in a cavity formed by the outer housing. For example, the internal component may include an audio module, a Bluetooth module, a power supply module, and the like. A working mode of the left earphone and the right earphone includes a single-ear mode and a dual-ear mode. In the single-earphone mode, the left earphone or the right earphone is taken out from the earphone case, and establishes a Bluetooth connection to another Bluetooth device, to receive and play an audio. In the dual-ear mode, both the left earphone and the right earphone are taken out from the earphone case. One of the earphones serves as a primary earphone to be connected to another electronic device, to receive and play an audio. The other earphone serves as a secondary earphone to assist the primary earphone in working and establish a Bluetooth connection to the primary earphone, to receive the audio sent by the primary earphone, or listen to an audio sent to the primary earphone by another electronic device (for example, a mobile phone) and play the audio synchronously with the primary earphone. Primary/secondary roles of the two earphones may be switched during use of the TWS Bluetooth earphones. When the left earphone is the primary earphone, the right earphone is the secondary earphone. Alternatively, when the right earphone is the primary earphone, the left earphone is the secondary earphone. In addition, when the TWS Bluetooth earphones are placed in the earphone case and the earphone case is closed, a Bluetooth connection established between the primary earphone of the TWS Bluetooth earphones and a terminal device is disconnected, and a Bluetooth connection between the primary earphone and the secondary earphone is also disconnected.

The earphone case includes a bottom case and a cover, and is configured to: accommodate the left earphone and the right earphone, and charge the left earphone and the right earphone. It should be noted that the earphone case can detect whether the left and right earphones are in the earphone case, can detect an open/closed state of the cover, and the like, and then can assist the left earphone and the right earphone in working based on the detection. For example, after detecting that both the left earphone and the right earphone are located inside the earphone case and the cover of the earphone case is opened, the earphone case notifies the primary earphone and the secondary earphone of an open cover event, so that the primary earphone and the secondary earphone establish a Bluetooth connection. Alternatively, when detecting that the left earphone or the right earphone is in the earphone case and the earphone case is in a closed state, the earphone case charges the earphone inside the earphone case.

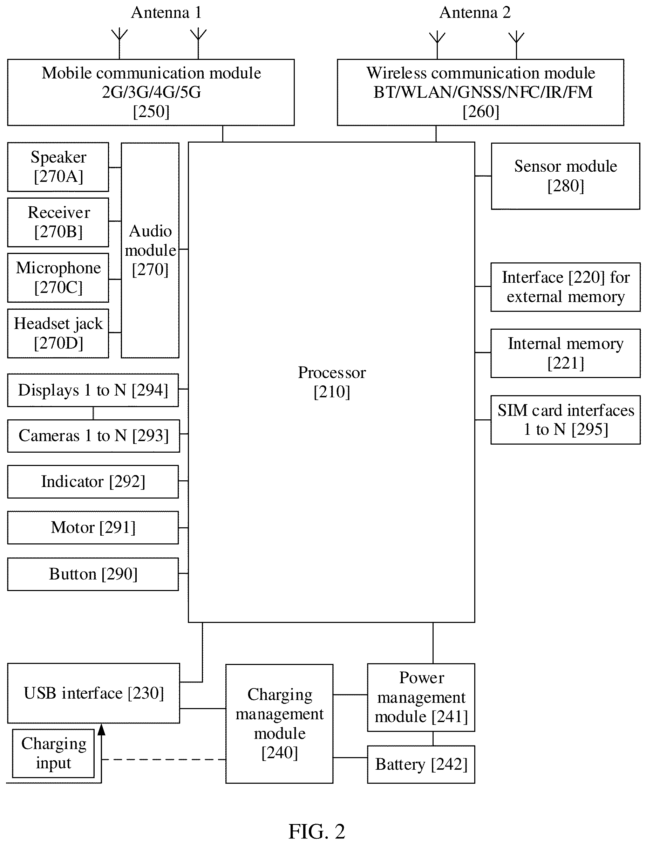

FIG. 2 is a diagram of a structure of a terminal device according to an embodiment of this application. The terminal device may include a processor 210, an interface 220 for external memory, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, a subscriber identity module (subscriber identity module, SIM) card interface 295, and the like.

It may be understood that the structure shown in embodiments of this application does not constitute a specific limitation on the terminal device. In some other embodiments of this application, the terminal device may include more or fewer components than those shown in the figure, or some components may be combined, some components may be split, or different component arrangements may be used. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processor (neural-network processing unit, NPU), and/or the like. Different processing units may be independent components, or may be integrated into one or more processors. The controller may be a nerve center and a command center of the terminal device. The controller may generate an operation control signal based on instruction operation code and a time sequence signal, to complete control of instruction reading and instruction execution.

The memory may be further disposed in the processor 210, and is configured to store instructions and data. In some embodiments, the memory in the processor 210 is a cache. The memory may store instructions or data that just used or cyclically used by the processor 210. If the processor 210 needs to use the instructions or the data again, the processor may directly invoke the instructions or the data from the memory. This avoids repeated access, and reduces waiting time of the processor 210, to improve system efficiency.

The interface 220 for external memory may be configured to connect to an external memory card, for example, a micro SD card, to extend a storage capability of the terminal device. The external memory card communicates with the processor 210 through the interface 220 for external memory, to implement a data storage function.. For example, files such as music and videos are stored in the external memory card.

The internal memory 221 may be configured to store computer-executable program code. The executable program code includes instructions. The processor 210 runs the instructions stored in the internal memory 221, to perform various function applications and data processing of the terminal device. The internal memory 221 may include a program storage area and a data storage area. The program storage area may store an operating system, an application required by at least one function (for example, a sound playing function or an image playing function). The data storage area may store data (for example, audio data and an address book) created during use of the terminal device.

The USB interface 230 is an interface that conforms to a USB standard specification, and may be specifically a mini USB interface, a micro USB interface, a USB type-C interface, or the like. The USB interface 230 may be configured to connect to a charger to charge the electronic device 200, or may be configured to perform data transmission between the electronic device 200 and a peripheral device, or may be configured to connect to a headset to play an audio through the headset. The interface may be further configured to connect to another electronic device, for example, an AR device.

The charging management module 240 is configured to receive a charging input from a charger. The charger may be a wireless charger or a wired charger. In some embodiments of wired charging, the charging management module 240 may receive a charging input of the wired charger through the USB interface 230. In some embodiments of wireless charging, the charging management module 240 may receive a wireless charging input through a wireless charging coil of the terminal device. When charging the battery 242, the charging management module 240 may further supply power to the electronic device through the power management module 241.

The power management module 241 is configured to connect to the battery 242, the charging management module 240, and the processor 210. The power management module 241 receives an input from the battery 242 and/or the charging management module 240, and supplies power to the processor 210, the internal memory 221, an external memory, the display 294, the camera 293, the wireless communication module 260, and the like. The power management module 241 may be further configured to monitor parameters such as a battery capacity, a battery cycle count, and a battery health status (electric leakage or impedance).

In some other embodiments, the power management module 241 may alternatively be disposed in the processor 210. In some other embodiments, the power management module 241 and the charging management module 240 may alternatively be disposed in a same component.

A wireless communication function of the terminal device may be implemented through the antenna 1, the antenna 2, the mobile communication module 250, the wireless communication module 260, the modem processor, the baseband processor, and the like.

The antenna 1 and the antenna 2 are configured to transmit and receive electromagnetic wave signals. Each antenna in the terminal device may be configured to cover one or more communication frequency bands. Different antennas may be further reused to improve antenna utilization. For example, the antenna 1 may be reused as a diversity antenna of a wireless local area network. In some other embodiments, the antenna may be used in combination with a tuning switch.

The mobile communication module 250 may provide a solution, applied to the terminal device, to wireless communication including 2G, 3G, 4G, 5G, or the like. The mobile communication module 250 may include at least one filter, a switch, a power amplifier, a low noise amplifier (low noise amplifier, LNA), and the like. The mobile communication module 250 may receive an electromagnetic wave through the antenna 1, perform processing such as filtering or amplification on the received electromagnetic wave, and transmit a processed electromagnetic wave to the modem processor for demodulation. The mobile communication module 250 may further amplify a signal modulated by the modem processor, and convert an amplified signal into an electromagnetic wave for radiation through the antenna 1.

The wireless communication module 260 may provide a solution, applied to the terminal device, to wireless communication including a wireless local area network (wireless local area network, WLAN) (for example, a wireless fidelity (wireless fidelity, Wi-Fi) network), Bluetooth, a global navigation satellite system (global navigation satellite system, GNSS), frequency modulation (frequency modulation, FM), near field communication (near field communication, NFC), an infrared (infrared, IR) technology, or the like.

The wireless communication module 260 may be one or more devices integrating at least one communication processing module. The wireless communication module 260 receives an electromagnetic wave through the antenna 2, performs frequency modulation and filter processing on the electromagnetic wave signal, and sends a processed signal to the processor 210. The wireless communication module 260 may further receive a to-be-sent signal from the processor 210, perform frequency modulation and amplification on the signal, and convert a processed signal into an electromagnetic wave for radiation through the antenna 2.

The terminal device may implement an audio function through the audio module 270, the speaker 270A, the receiver 270B, the microphone 270C, the headset jack 270D, the application processor,

The audio module 270 is configured to convert a digital audio signal into an analog audio signal for an output, and is also configured to convert an analog audio input into a digital audio signal. The audio module 270 may be further configured to encode and decode an audio signal. In some embodiments, the audio module 270 may be disposed in the processor 210, or some functional modules in the audio module 270 are disposed in the processor 210.

The speaker 270A, also referred to as a "loudspeaker", is configured to convert an audio electrical signal into a sound signal. The terminal device may be used to listen to music or answer a call in a hands-free mode over the speaker 270A. For example, the speaker may play a comparison analysis result provided in embodiments of this application.

The receiver 270B, also referred to as an "earpiece", is configured to convert an audio electrical signal into a sound signal. When a call is answered or voice information is received by the terminal device, the receiver 270B may be put close to a human ear to listen to a voice.

The microphone 270C, also referred to as a "mike" or a "mic", is configured to convert a sound signal into an electrical signal. When making a call or sending voice information, a user may make a sound near the microphone 270C through the mouth of the user, to input a sound signal to the microphone 270C. At least one microphone 270C may be disposed in the terminal device. In some other embodiments, two microphones 270C may be disposed in the terminal device, to collect a sound signal and implement a noise reduction function. In some other embodiments, three, four, or more microphones 270C may alternatively be disposed in the terminal device, to collect a sound signal, implement noise reduction, identify a sound source, implement a directional recording function, and the like.

The headset jack 270D is configured to connect to a wired headset. The headset jack 270D may be a USB interface 230, or may be a 3.5 mm open mobile terminal platform (open mobile terminal platform, OMTP) standard interface or cellular telecommunications industry association of the USA (cellular telecommunications industry association of the USA, CTIA) standard interface.

The button 290 includes a power button, a volume button, and the like. The button 290 may be a mechanical button, or may be a touch button. The terminal device may receive a button input, and generate a button signal input related to a user setting and function control of the terminal device.

The motor 291 may generate a vibration prompt. The motor 291 may be configured to provide an incoming call vibration prompt and touch vibration feedback. For example, touch operations performed on different applications (for example, photographing and audio playing) may correspond to different vibration feedback effect. The motor 291 may also correspond to different vibration feedback effect for touch operations performed on different areas of the display 294. Different application scenarios (for example, time reminder, information receiving, an alarm clock, and a game) may also correspond to different vibration feedback effect. Touch vibration feedback effect may be further customized.

The indicator 292 may be an indicator light, and may be configured to indicate a charging status and a power change, or may be configured to indicate a message, a missed call, a notification, and the like.

The camera 293 is configured to capture a static image or a video. An optical image of an object is generated through the lens, and is projected onto the photosensitive element. The photosensitive element converts an optical signal into an electrical signal, and then transfers the electrical signal to the ISP to convert the electrical signal into a digital image signal. In some embodiments, the terminal device may include one or N cameras 293, where N is a positive integer greater than 1.

The display 294 is configured to display an image, a video, or the like. The display 294 includes a display panel. In some embodiments, the terminal device may include one or N displays 294, where N is a positive integer greater than 1.

The SIM card interface 295 is configured to connect to a SIM card. The SIM card may be inserted into the SIM card interface 295 or removed from the SIM card interface 295, to implement contact with or separation from the terminal device. The terminal device may support one or N SIM card interfaces, where N is a positive integer greater than 1. The SIM card interface 295 may support a nano-SIM card, a micro-SIM card, a SIM card, and the like. A plurality of cards may be simultaneously inserted into a same SIM card interface 295. The plurality of cards may be of a same type or different types. The SIM card interface 295 is compatible with different types of SIM cards. The SIM card interface 295 is also compatible with an external memory card. The terminal device interacts with a network by using the SIM card, to implement functions such as call and data communication.

The foregoing illustrates the structures of some Bluetooth devices (for example, the Bluetooth earphones and the terminal device) provided in embodiments. The Bluetooth devices can establish a Bluetooth connection based on hardware and software configuration of the Bluetooth devices and according to user control, to implement mutual Bluetooth communication.

After a plurality of Bluetooth devices establish the Bluetooth connection, a Bluetooth communication system may be formed. The Bluetooth communication system is a small communication network, and may also be referred to as a piconet (Piconet).

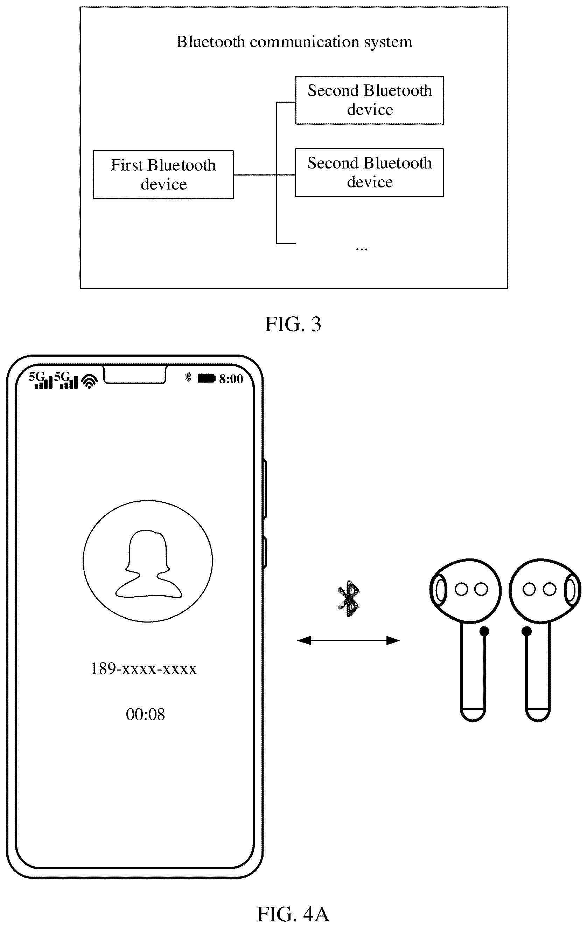

FIG. 3 is a diagram of a structure of a Bluetooth communication system according to an embodiment of this application. The system includes a first Bluetooth device and at least one second Bluetooth device. The first Bluetooth device is connected to each second Bluetooth device via Bluetooth.

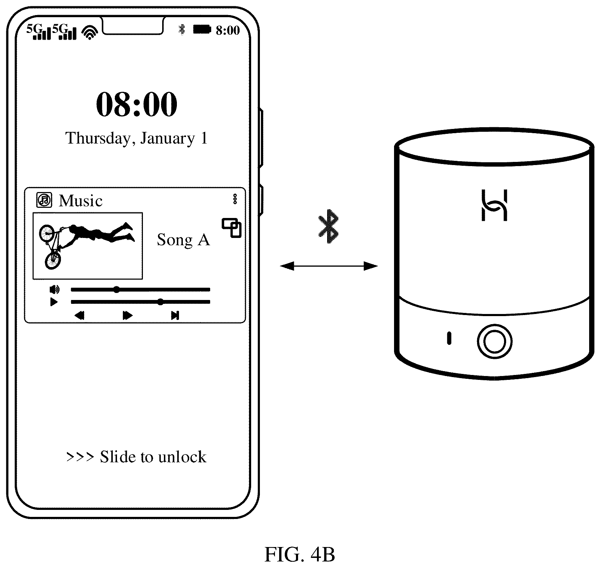

In the Bluetooth communication system, the first Bluetooth device and the second Bluetooth device can cooperate with each other to implement some specific functions. For example, as shown in FIG. 4A, when the first Bluetooth device is TWS Bluetooth earphones and the second Bluetooth device is a mobile phone, the TWS Bluetooth earphones can assist the mobile phone in voice call making, recording, audio playing, or the like. Alternatively, as shown in FIG. 4B, when the first Bluetooth device is a mobile phone and the second Bluetooth device is a Bluetooth speaker, the mobile phone can play an audio of the mobile phone through the Bluetooth speaker.

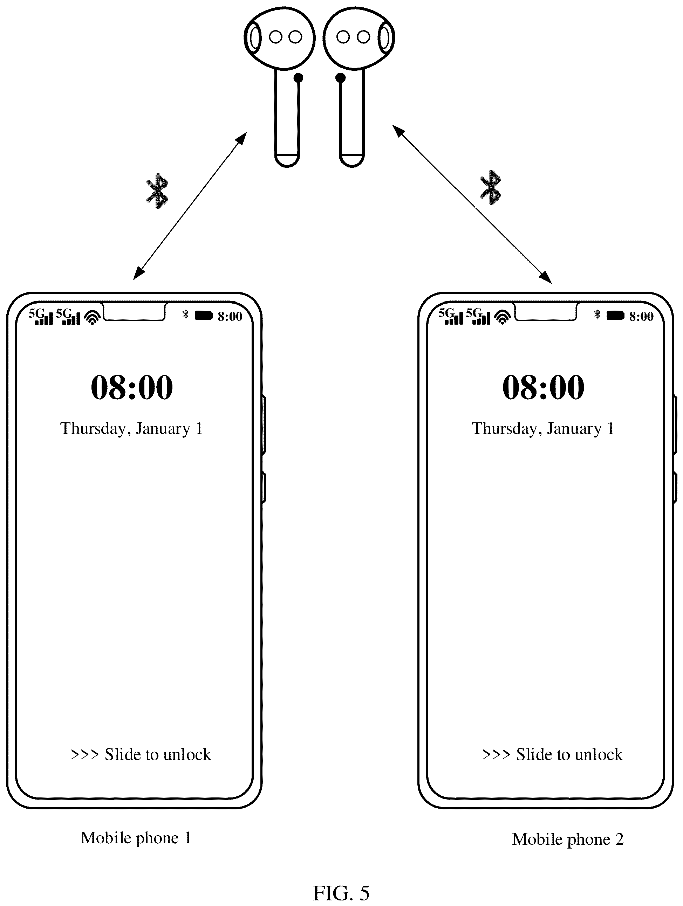

Although one first Bluetooth device can be simultaneously connected to a plurality of second Bluetooth devices, the first Bluetooth device usually performs data transmission with only one second Bluetooth device at same time. For example, as shown in FIG. 5, the first Bluetooth device is Bluetooth earphones, the second Bluetooth device is a mobile phone, and the Bluetooth earphones are simultaneously connected to two mobile phones. In an actual use process, at a same moment, the Bluetooth earphones usually establish a data transmission link with one target mobile phone, to perform audio transmission. The target mobile phone is usually determined by the Bluetooth earphones. For example, the Bluetooth earphones may determine the target mobile phone through arbitration based on a service priority of each mobile phone.

To ensure communication security of the Bluetooth system, pairing (pairing) and bonding (bonding) need to be performed via BT before a first connection is established between the first Bluetooth device and the second Bluetooth device. The first connection includes a first connection after pairing is canceled. During the first connection, a target device for communication can be found and determined through pairing, that is, identity determining can be implemented. After two Bluetooth devices are bonded, a long-term key (long-term key, LTK) can be established between the two Bluetooth devices. In this way, when the two Bluetooth devices are reconnected, a procedure related to pairing and bonding may be skipped, and the long-term key can be directly used for Bluetooth encryption connection. This increases a connection speed and improves user experience.

In embodiments, a process in which the two Bluetooth devices establish a Bluetooth connection again after the two Bluetooth devices are successfully paired and bonded is referred to as reconnection. In the process of establishing the Bluetooth connection between the two Bluetooth devices, for example, in the reconnection process, a Bluetooth device that proactively requests communication is referred to as a primary device (Master), and a Bluetooth device that passively performs communication is referred to as a secondary device (Slave). For example, in a process in which the Bluetooth earphones proactively reconnect to the mobile phone after being powered on, the Bluetooth earphones are the primary device, and the mobile phone is the secondary device.

To meet a data transmission requirement, the Bluetooth connection established between the two Bluetooth devices is usually a BT connection. Therefore, in the reconnection process, the Bluetooth devices usually also need to be reconnected via BT, to establish the Bluetooth connection again.

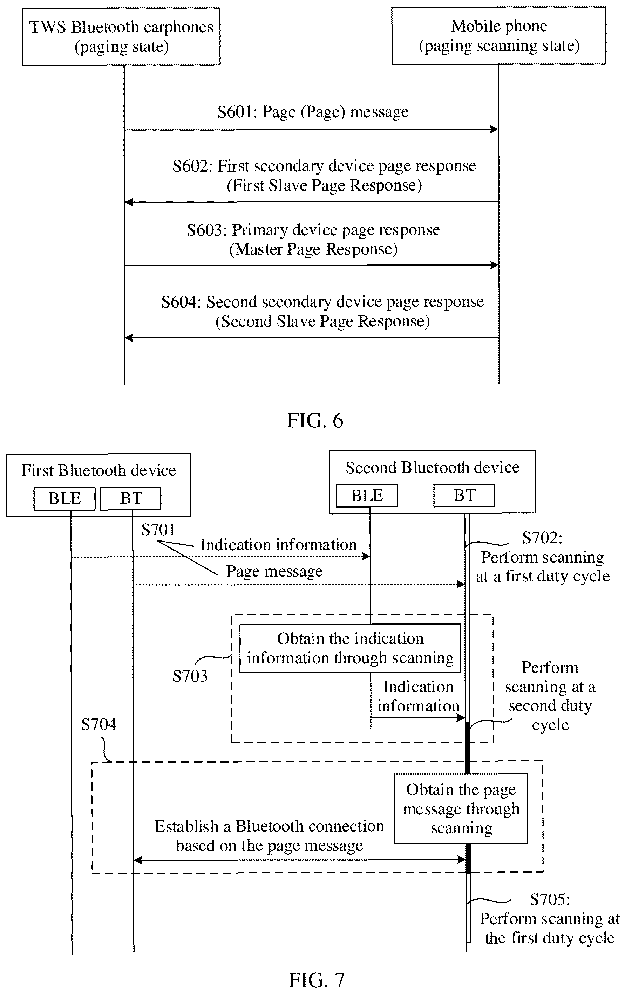

FIG. 6 is a diagram of a Bluetooth device reconnection process according to an embodiment of this application. The following illustrates the Bluetooth device reconnection process by using an example in which TWS Bluetooth earphones proactively reconnect to a mobile phone. In addition, the following S601 to S604 are all performed based on BT.

S601: The TWS Bluetooth earphones send a page (Page) message to the mobile phone.

In this embodiment, the page message is an identification (identification, ID) information packet carrying a device access code (device access code, DAC) of the mobile phone, and is used to request to establish a Bluetooth connection to the mobile phone.

When a Bluetooth function of the TWS Bluetooth earphones is enabled and no connection to another Bluetooth device is established, the TWS Bluetooth earphones enter a paging state until paging times out or paging succeeds. For example, the TWS Bluetooth earphones enter the paging state after an earphone case is opened. Alternatively, the TWS Bluetooth earphones enter the paging state when the TWS Bluetooth earphones are disconnected from the mobile phone but the Bluetooth function is still enabled. In the paging state, the TWS Bluetooth earphones can proactively reconnect to a Bluetooth device that is recently connected. In this example, the Bluetooth earphones are recently connected to the mobile phone. In this case, when the TWS Bluetooth earphones are in the paging state, the TWS Bluetooth earphones usually continuously send the page message on 79 channels of BT in a frequency hopping mode, and select a new frequency at an interval of 312.5 µs to send the page message until paging times out or paging succeeds.

S602: After receiving the page message, the mobile phone returns a first secondary device page response (First Slave Page Response).

In this embodiment, the first secondary device page response is an ID packet carrying a DAC of the mobile phone.

After being powered on or enabling the Bluetooth function, the mobile phone usually enters a page scan (Page Scan) state to scan the page message. However, the mobile phone does not know whether there is an electronic device paging the mobile phone. Therefore, to reduce power consumption of the device, the mobile phone does not continuously perform scanning, but performs scanning intermittently at a preset duty cycle.

In this embodiment, the duty cycle is a ratio of a page scan window (page scan window) to a page scan interval (page scan interval). The page scan window is duration of each scan, and the page scan interval is an interval between two consecutive scanning processes. It may be understood that a larger duty cycle indicates higher scanning efficiency but higher power consumption of the device. For example, a scanning duty cycle preset by the mobile phone is "11.25 ms/1.28s", where 11.25 ms is the scan time window, and 1.28s is the scan time interval.

Because the page message is advertised on the 79 channels of BT in turn, the mobile phone needs to listen to the page message on the 79 channels in turn in a scanning process. For example, the mobile phone listens to, at a new listening frequency in the page scan window at an interval of one page scan interval based on a paging hopping sequence (paging hopping sequence), a device that pages the mobile phone, that is, listens to a channel. At a same moment, when a channel on which the Bluetooth earphones send the page message is the same as a channel to which the mobile phone listens, in other words, when the Bluetooth earphones and the mobile phone are at a same communication frequency, the mobile phone may receive the page message. The mobile phone sends the first secondary device page response to the Bluetooth earphones in response to the page message.

S603: The Bluetooth earphones send a primary device page response (Master Page Response) to the mobile phone.

In this embodiment, the primary device page response is a frequency hopping spread (frequency hopping spread, FHS) packet, and the FHS packet carries clock information and address information of a primary device (namely, the Bluetooth earphones). The clock information is used to perform clock synchronization between the mobile phone and the Bluetooth earphones, and the address information is used to establish the Bluetooth connection between the Bluetooth earphones and the mobile phone.

S604: The mobile phone sends a second secondary device page response (Second Slave Page Response) to the Bluetooth earphones.

In this embodiment, the second secondary device page response is an ID packet carrying a DAC of the mobile phone.

Based on the steps S601 to S604, an asynchronous connectionless (asynchronous connectionless, ACL) connection may be established between the Bluetooth earphones and the mobile phone. The Bluetooth earphones and the mobile phone may exchange data through the ACL connection. For example, the mobile phone may send an audio to the Bluetooth earphones for playing.

It should be noted that ACL is a connection technology supported by a Bluetooth baseband, and is mainly used for packet data transmission, for example, audio transmission. In addition, the ACL technology is usually not used to transmit a voice (namely, a voice generated during a call) transmission, and the voice is usually transmitted by using a synchronous connection oriented (synchronous connection oriented, SCO) technology.

After S601 to S604 is performed, the Bluetooth earphones may further perform authentication and encryption with the mobile phone, and send battery level information to the mobile phone. After receiving the battery level information of the Bluetooth earphones, a Bluetooth module of the mobile phone may transparently transmit the battery level information to a one-touch connection module of the mobile phone by using an attention (attention, AT) command. Then, the one-touch connection module sends the battery level information to an audio management module, and the audio management module controls the mobile phone to display the battery level information. For example, when the Bluetooth earphones are TWS Bluetooth earphones, the battery level information of the TWS Bluetooth earphones may include battery level information of an earphone case, battery level information of a left earphone, battery level information of a right earphone, and the like. This is not limited in embodiments.

However, in the Bluetooth device reconnection process, the primary device (for example, the Bluetooth earphones) pages the secondary device (for example, the mobile phone) on the 79 channels of BT in the frequency hopping mode, and the secondary device also scans paging on the 79 channels of BT at a preset duty cycle. The paging succeeds only when the primary device and the secondary device are on a same channel. Because the primary device has a large quantity of paging channels, and the preset duty cycle of the secondary device is usually low, the paging process takes long time, resulting in a low reconnection speed of the Bluetooth devices.

In addition, when the reconnection speed of the Bluetooth devices is low, a speed of displaying related Bluetooth connection information (such as information indicating that the Bluetooth connection succeeds, the battery level information of the Bluetooth earphones, and model information of the Bluetooth earphones) in an electronic device like the mobile phone is low, affecting user experience.

In view of this, embodiments of this application provide a Bluetooth communication system. In the Bluetooth communication system, a first Bluetooth device (primary device) can indicate a second Bluetooth device (secondary device) to increase a scanning duty cycle of BT through BLE advertising. This increases a reconnection speed of the two Bluetooth devices, and improves user experience.

The following describes in detail the Bluetooth device communication system provided in embodiments of this application.

FIG. 7 is a working flowchart of a Bluetooth communication system according to an embodiment of this application. The working flowchart relates to a process in which a first Bluetooth device reconnects to a second Bluetooth device in the Bluetooth communication system. The following steps S701 to S705 are specifically included.

S701: The first Bluetooth device sends indication information via BLE, and sends a page message via BT.

In this embodiment, the page message is used to request to reconnect to the second Bluetooth device. For details, refer to S601. Details are not described herein again.

In this embodiment, the indication information is used to indicate the second Bluetooth device to increase a scanning duty cycle of BT. The indication information usually carries unique identification information of the first Bluetooth device and/or the second Bluetooth device, and may carry or not carry a second duty cycle (that is, indicate a duty cycle used by the second Bluetooth device). For example, the indication information is a BLE advertising message, the unique identification information may be a device access code DAC, address information, and the like, and the second duty cycle may be 11.25 ms/37.5 ms.

In this embodiment, the first Bluetooth device may first send the indication information via BLE, and then send the page message via BT; or may send the indication information via BLE and send the page message via BT simultaneously. This is not limited in this embodiment.

In this embodiment, after detecting a first event, the first Bluetooth device usually starts to send the indication information via BLE, and sends the page message via BT. For example, the first event is: successfully enabling a Bluetooth function of the first Bluetooth device. For example, a mobile phone automatically enables the Bluetooth function after being powered on, or enables the Bluetooth function based on an operation performed by a user on a Bluetooth control. TWS Bluetooth earphones automatically enable the Bluetooth function after an earphone case is opened. The operation performed by the user on a terminal device includes a tap operation, a double-tap operation, a touch and hold operation, a voice control operation, a mid-air control operation, and the like. This is not limited in this embodiment. Alternatively, the first event is: after the Bluetooth connection between the first Bluetooth device and the second Bluetooth device is disconnected, determining that the Bluetooth connection needs to be re-established. For example, in a process in which the TWS Bluetooth earphones normally communicate with the mobile phone via Bluetooth, the Bluetooth connection between the TWS Bluetooth earphones and the mobile phone is suddenly disconnected because signal strength is less than a threshold, and the TWS Bluetooth earphones determine that the Bluetooth connection needs to be re-established.

S702: The second Bluetooth device performs scanning via BLE, and performs scanning via BT at a first duty cycle.

After the Bluetooth function of the second Bluetooth device is enabled, both BLE and BT of the second Bluetooth device enter a scanning state, and the second Bluetooth device usually scans the page message based on BT. However, because the second Bluetooth device usually cannot sense whether there is another Bluetooth device paging the second Bluetooth device, BT of the second Bluetooth device usually keeps scanning at the preset first duty cycle. To reduce power consumption of the device, the first duty cycle is usually small. For example, the first duty cycle is 11.25 ms/1.28s.

A sequence of starting to perform S701 and S702 is not limited in this embodiment. For example, the first Bluetooth device may first perform S701, and then the second Bluetooth device performs S702; or the second Bluetooth device may first perform S702, and then the first Bluetooth device performs S701.

S703: After obtaining the indication information through scanning via BLE, the second Bluetooth device controls scanning via BT at a second duty cycle, where the second duty cycle is greater than the first duty cycle.

It should be noted that the second Bluetooth device receives the indication information in a scanning manner. Therefore, it can be understood that the second Bluetooth device can receive indication information sent by a paired device, and indication information sent by another Bluetooth device. In this way, to ensure security of the second Bluetooth device, after obtaining the indication information through scanning via BLE, the second Bluetooth device needs to identify the indication information based on the unique identification information (for example, a DAC) carried by the indication information. After identification of the indication information succeeds, the second Bluetooth device can control scanning via BT at the second duty cycle based on an indication of the indication information. Details are described below.

In some embodiments, the indication information carries unique identification information of the first Bluetooth device, for example, a first DAC. In this case, after receiving the indication information, the second Bluetooth device determines, based on the unique identification information, whether the first Bluetooth device has been paired with the second Bluetooth device. If the first Bluetooth device has been paired with the second Bluetooth device, it indicates that the two Bluetooth devices are mutually trusted devices, and identification of the indication information succeeds. Then, the second Bluetooth device obtains the second duty cycle based on the indication information, and controls scanning via BT at the second duty cycle.

In some other embodiments, the indication information carries unique identification information of the second Bluetooth device, for example, a second DAC. Because the second DAC is information that can be obtained only by a trusted Bluetooth device of the second Bluetooth device, after receiving the indication information, the second Bluetooth device may directly obtain the second duty cycle based on the indication information, and control scanning via BT at the second duty cycle.

For obtaining of the second duty cycle, in some embodiments, the indication information carries the second duty cycle. In this case, after obtaining the indication information through scanning via BLE, the second Bluetooth device obtains the second duty cycle from the indication information, and controls scanning via BT at the second duty cycle. In some other embodiments, the indication information does not carry the second duty cycle, and the second duty cycle is pre-stored locally in the second Bluetooth device. In this case, after obtaining the indication information through scanning via BLE, the second Bluetooth device obtains the second duty cycle locally, and controls scanning via BT at the second duty cycle.

S704: After obtaining the page message through scanning via BT, the second Bluetooth device establishes a Bluetooth connection to a primary device based on the page message.

It should be noted that, in this embodiment, the Bluetooth connection between the first Bluetooth device and the second Bluetooth device is referred to as a first Bluetooth connection, and the first Bluetooth connection is a BT connection. For a specific establishment process of the first Bluetooth connection, refer to the foregoing descriptions. Details are not described herein again.

For S703 and S704, it should be noted that, when the first Bluetooth device first sends the indication information via BLE and then sends the page message via BT, the second Bluetooth device usually first performs S703 and then performs S704. However, when the first Bluetooth device sends the indication information via BLE and sends the page message via BT simultaneously in S701, it cannot be ensured that the second Bluetooth device first obtains the indication information through scanning via BLE or first obtains the page message through scanning via BT. It may be understood that, if the second Bluetooth device first obtains the indication information through scanning, the second Bluetooth device may perform scanning at a large duty cycle in an entire reconnection process, to increase a reconnection speed. If the second Bluetooth device first obtains the page message through scanning and then obtains the indication information through scanning, the second Bluetooth device may perform scanning via BT at a large duty cycle in a reconnection process (for example, in a process of scanning a primary device page response) after receiving the page message, to increase a reconnection speed to some extent.

In addition, it should be noted that three dedicated advertising channels are set for BLE, and BLE sends the indication information through the advertising channels. Therefore, the second Bluetooth device can quickly obtain the indication information through scanning via BLE, to quickly increase the scanning duty cycle of BT. In this case, regardless of whether the first Bluetooth device first sends the indication information via BLE and then sends the page message via BT, or whether the first Bluetooth device sends the indication information via BLE and sends the page message via BT simultaneously, the second Bluetooth device usually first receives the indication information via BLE, to increase a reconnection speed of BT.

Certainly, in some low-probability cases, before the second Bluetooth device obtains the indication information through scanning via BLE, the second Bluetooth device may first obtain the page message through scanning via BT. However, the second Bluetooth device may continue to increase the scanning duty cycle of BT in a subsequent paging process (for example, in a process of scanning a primary device page response), to increase a scanning rate in a partial reconnection process, thereby increasing a reconnection speed.

In the foregoing S701 to S704, for example, when the first duty cycle is 11.25 ms/1.28s≈0.0088 and the second duty cycle is 11.25 ms/37.5 ms≈0.3, the second duty cycle is approximately 34 times the first duty cycle. Because the second duty cycle is far greater than the first duty cycle, after the second Bluetooth device performs scanning via BT by increasing the scanning duty cycle from the first duty cycle to the second duty cycle, the second Bluetooth device can quickly obtain, through scanning, the page message sent by the first Bluetooth device in the reconnection process, so that the Bluetooth connection can be quickly established between the two Bluetooth devices.

S705: The second Bluetooth device resumes scanning via BT at the first duty cycle.

The second duty cycle is large, and therefore power consumption of the device is high when the second Bluetooth device performs scanning via BT at the second duty cycle. In this way, to reduce the power consumption of the device, after establishing the Bluetooth connection to the first Bluetooth device, the second Bluetooth device may control BT to resume scanning at the first duty cycle.

In conclusion, in this embodiment, when reconnecting to the second Bluetooth device, the first Bluetooth device can send the indication information via BLE, to indicate the second Bluetooth device to increase the scanning duty cycle of BT. This increases a rate at which the second Bluetooth device obtains related information (for example, the page message and other related information) through scanning in the reconnection process, increases the reconnection speed, and improves user experience.

It should be noted that, in some other embodiments, when the first Bluetooth device includes two BT modules, the first Bluetooth device may alternatively send the indication information and the page message in parallel via BT. In this solution, a process in which the first Bluetooth device sends the indication information via BT does not affect a process in which the first Bluetooth device reconnects to the second Bluetooth device via BT, and the second Bluetooth device can obtain the indication information through scanning via BT in the reconnection process, and increase the scanning duty cycle of BT based on the indication information. Therefore, the method can be used to increase the reconnection speed of the first Bluetooth device and the second Bluetooth device to some extent.

The following describes in detail a process in which the first Bluetooth device reconnects to the second Bluetooth device in the Bluetooth communication system by using an example in which the first Bluetooth device is TWS Bluetooth earphones, the second Bluetooth device is a mobile phone, the first Bluetooth device sends indication information via BLE, and sends a page message via BT to reconnect to the second Bluetooth device.

The TWS Bluetooth earphones include a primary earphone and a secondary earphone, and both the primary earphone and the secondary earphone support BT&BLE dual-mode Bluetooth. In this case, the primary earphone may independently reconnect to the mobile phone, or reconnect to the mobile phone with assistance of the secondary earphone. Details are described below.

### Example 1: The primary earphone independently reconnects to the mobile phone.

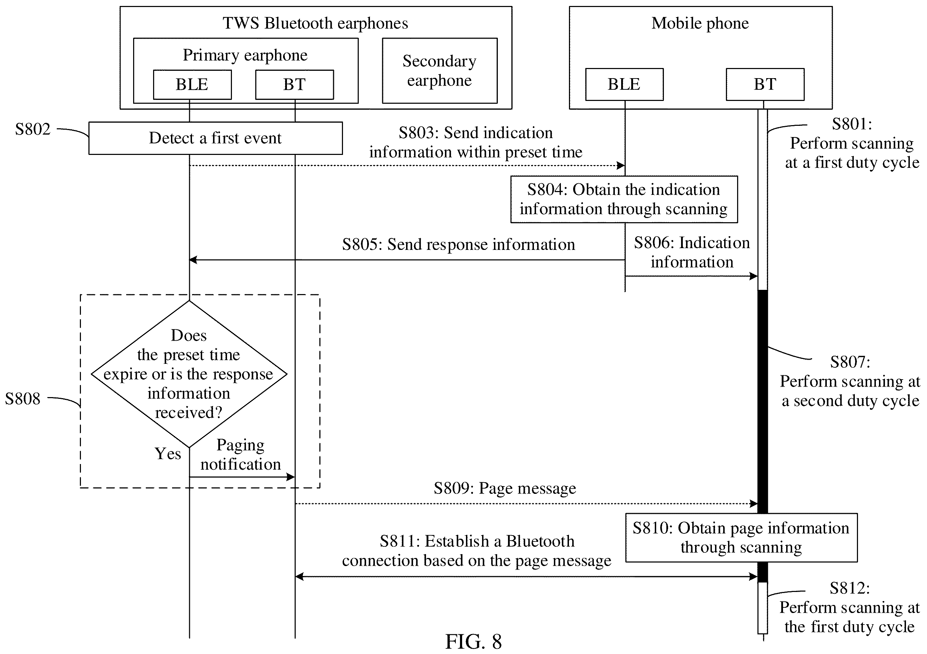

FIG. 8 is a flowchart of a Bluetooth device reconnection method according to an embodiment of this application. The method relates to a process in which the primary earphone independently reconnects to the mobile phone, and specifically includes the following steps S801 to S812.

S801: The mobile phone performs scanning via BLE and BT, where a scanning duty cycle of BT is a first scanning duty cycle.

For example, the first duty cycle is 11.25 ms/1.28s.

S802 and S803: After detecting a first event, the primary earphone sends indication information to the mobile phone via BLE within preset time.

In some embodiments, the first event is: enabling a Bluetooth function after a cover of the TWS Bluetooth earphones is opened. It can be learned from the foregoing descriptions that the earphone case of the TWS Bluetooth earphones can detect an open/closed state of the cover. After the earphone case detects that the cover changes from a closed state to an open state, the earphone case confirms that an open cover event occurs, and proactively notifies the primary earphone and the secondary earphone of the open cover event. After receiving the open cover event, the primary earphone and the secondary earphone enable the Bluetooth function and establish a Bluetooth connection, which is referred to as a second Bluetooth connection in this embodiment.

In some embodiments, the indication information is a BLE advertising message, and the indication information carries unique identification information of the mobile phone and information about a second duty cycle, to indicate the mobile phone to perform BT scanning at the second duty cycle. For example, the second duty cycle is 11.25 ms/37.5 ms. It may be understood that because the indication information carries the unique identification information of the mobile phone, only the mobile phone switches, based on the indication information, to perform scanning at the second duty cycle, and another electronic device is not affected.

In addition, the preset time within which the primary earphone sends the indication information may be 20 ms, 50 ms, 100 ms, or the like. This is not limited in this embodiment. To avoid affecting a reconnection speed because the mobile phone sends the indication information for long time, after the preset time expires, the primary earphone stops sending the indication information, and jumps to perform S808 and S809 to page the mobile phone.

S804 to S806: After obtaining the indication information through scanning via BLE, the mobile phone sends response information to the primary earphone, and sends the indication information to BT.

In this embodiment, the response information sent by the mobile phone via BLE may also be BLE advertising. The BLE advertising is used to indicate, to the TWS Bluetooth earphones, that the mobile phone has received the indication information.

In addition, a sequence of performing S805 and S806 by the mobile phone is not limited in this embodiment. For example, the mobile phone may perform S805 before performing S806, or may perform S806 before performing S805.

S807: After receiving the indication information via BT, the mobile phone increases the scanning duty cycle from the first duty cycle to the second duty cycle.

For example, after receiving, via BT, the indication information sent via BLE, the mobile phone increases the scanning duty cycle from 11.25 ms/1.28s to 11.25 ms/37.5 ms.

S808: After the preset time expires or the response information sent by the mobile phone is received via BLE, the primary earphone sends a paging notification to BT of the primary earphone, where the paging notification is used to indicate BT to page the mobile phone.

S809: The primary earphone sends a page message to the mobile phone via BT.

S810 and S811: After obtaining the page message based on the second duty cycle through scanning via BT, the mobile phone establishes a Bluetooth connection to the Bluetooth earphones based on the page message. The Bluetooth connection is a BT connection. For a specific establishment process of the Bluetooth connection, refer to S601 to S604. Details are not described herein again in this embodiment.

S812: The mobile phone resumes scanning via BT at the first duty cycle.

In this embodiment, the primary earphone first indicates, through BLE advertising, the mobile phone to increase the scanning duty cycle of BT, and then reconnects to the mobile phone via BT, to independently implement a fast reconnection. In comparison with a conventional BT reconnection process, in this reconnection process, although the primary earphone additionally performs the process of "indicating, via BLE, the mobile phone to increase the scanning duty cycle of BT", the indication process is advertised on the three dedicated BLE advertising channels, and therefore takes very short time. In addition, after the mobile phone increases the scanning duty cycle of BT, reconnection time consumption can be significantly reduced. Therefore, from a perspective of overall effect, the method provided in this embodiment can be used to significantly increase a reconnection speed of the Bluetooth devices.

### Example 2: The primary earphone reconnects to the mobile phone with assistance of the secondary earphone.

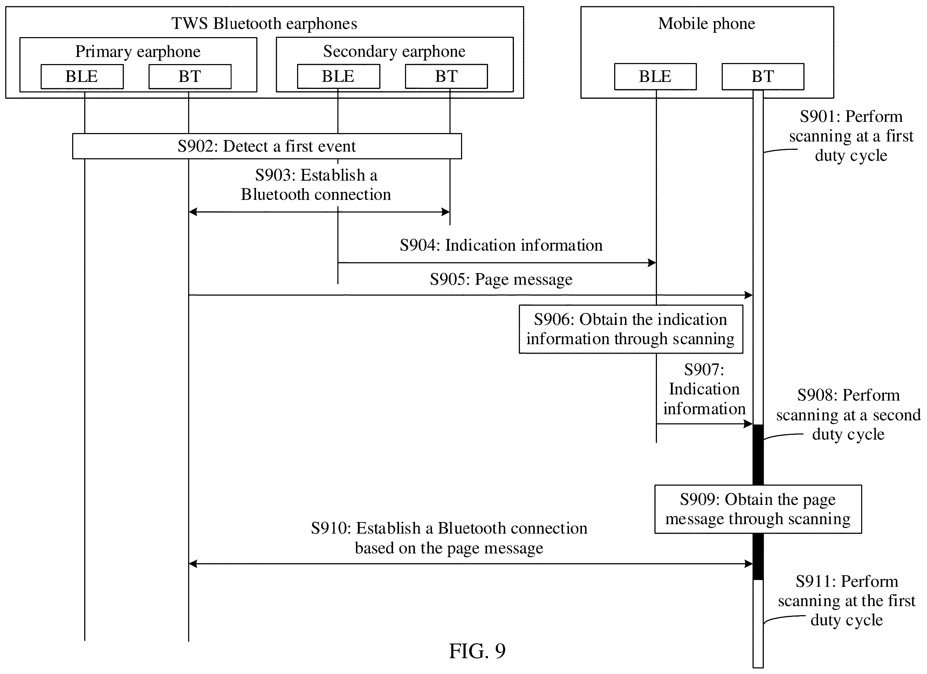

FIG. 9 is a flowchart of a Bluetooth device reconnection method according to another embodiment of this application. The method relates to a process in which a primary earphone reconnects to a mobile phone with assistance of a secondary earphone. The method specifically includes the following steps S901 to S911.

S901: The mobile phone performs scanning via BLE and BT, where a scanning duty cycle of BT is a first scanning duty cycle.

For example, the first duty cycle is 11.25 ms/1.28s.

S902 and S903: After detecting a first event, the primary earphone reconnects to the secondary earphone, and establishes a Bluetooth connection to the secondary earphone.

In this embodiment, the Bluetooth connection established between the primary earphone and the secondary earphone is usually a BT connection, or certainly may be a BLE connection. This is not limited in this embodiment. After establishing the Bluetooth connection, the primary earphone and the secondary earphone may send information to each other through a Bluetooth link. In addition, for details about the first event, refer to related descriptions in S802. Details are not described herein again.

S904: The secondary earphone sends indication information to the mobile phone via BLE within preset time.

For details about the indication information, refer to the foregoing descriptions. Details are not described herein again. In addition, for example, the preset time may be 1000 ms, 2000 ms, or the like. This is not limited in this embodiment. After the preset time expires, the secondary earphone automatically stops sending the indication information.

Optionally, the secondary earphone may alternatively send the indication information to the mobile phone via BLE based on an indication of the primary earphone.

S905: The primary earphone sends a page message to the mobile phone via BT.

In this embodiment, the primary earphone and the secondary earphone perform S904 and S905 in parallel. That is, when the secondary earphone indicates, through BLE advertising, the mobile phone to increase a scanning duty cycle of BT, the mobile phone normally performs operations such as paging in a reconnection process.

S906 and S907: After obtaining the indication information through scanning via BLE, the mobile phone sends the indication information to BT of the mobile phone.

S908: The mobile phone increases the scanning duty cycle from the first duty cycle to a second duty cycle via BT.

S909 and S910: After obtaining the page message through scanning via BT, the mobile phone establishes a Bluetooth connection to the primary earphone based on the page message. For details, refer to S601 to S604. Details are not described herein again in this embodiment.

For S904 to S910, it should be noted that because the TWS Bluetooth earphones send the indication information via BLE and send the page message via BT in parallel, theoretically, the mobile phone may first obtain the indication information through scanning or first obtain the page message through scanning in a process of performing scanning at the first duty cycle. However, in an actual scanning process, because there are only three BLE advertising channels for sending the indication information, and there are up to 79 BT channels for sending the page message, the mobile phone usually first obtains the indication information through scanning, and performs, based on the indication information, a subsequent operation of increasing the scanning duty cycle of BT, to quickly obtain the page message through scanning. For details, refer to related descriptions in S703 and S704.

S911: The mobile phone resumes scanning via BT at the first duty cycle.

In this embodiment, the TWS Bluetooth earphones indicate the mobile phone to increase the scanning duty cycle of BT through BLE advertising of the secondary earphone, and simultaneously reconnects to the mobile phone via BT of the primary earphone. Because the BLE advertising message can be quickly obtained by the mobile phone through scanning, the mobile phone can scan information at a large duty cycle during the reconnection to the primary earphone, so that a reconnection speed can be quickly increased.

With development of Bluetooth technologies, some first Bluetooth devices support dual connectivity, that is, support simultaneous connections to two second Bluetooth devices. For a first Bluetooth device that supports dual connectivity, if the first Bluetooth device is in a paired state with two recently connected second Bluetooth devices, after enabling the Bluetooth function, the first Bluetooth device serially reconnects to the two second Bluetooth devices. For example, in FIG. 5, the TWS Bluetooth earphones support simultaneous connections to a mobile phone 1 and a mobile phone 2. After the TWS Bluetooth earphones enable the Bluetooth function, if the TWS Bluetooth earphones are in a paired state with both the mobile phone 1 and the mobile phone 2, the TWS Bluetooth earphones serially reconnect to the mobile phone 1 and the mobile phone 2. In a serial reconnection process, the TWS Bluetooth earphones may first reconnect to the mobile phone 1, and then reconnect to the mobile phone 2; or may first reconnect to the mobile phone 2, and then reconnect to the mobile phone 1.

In a process in which the first Bluetooth device serially reconnects to a plurality of second Bluetooth devices, the first Bluetooth device may alternatively perform a reconnection according to the Bluetooth device reconnection method provided in embodiments of this application. A difference lies in that the first Bluetooth device needs to advertise the indication information only once, to indicate each second Bluetooth device to increase a scanning duty cycle of the second Bluetooth device, to increase a speed at which the first Bluetooth device reconnects to each second Bluetooth device, and further increase an overall reconnection speed of the serial reconnection.

The following uses an example in which the first Bluetooth device is TWS Bluetooth earphones, and the two second Bluetooth devices are a mobile phone 1 and a mobile phone 2 to describe in detail a process in which the TWS Bluetooth earphones serially reconnect to the mobile phone 1 and the mobile phone 2 quickly.

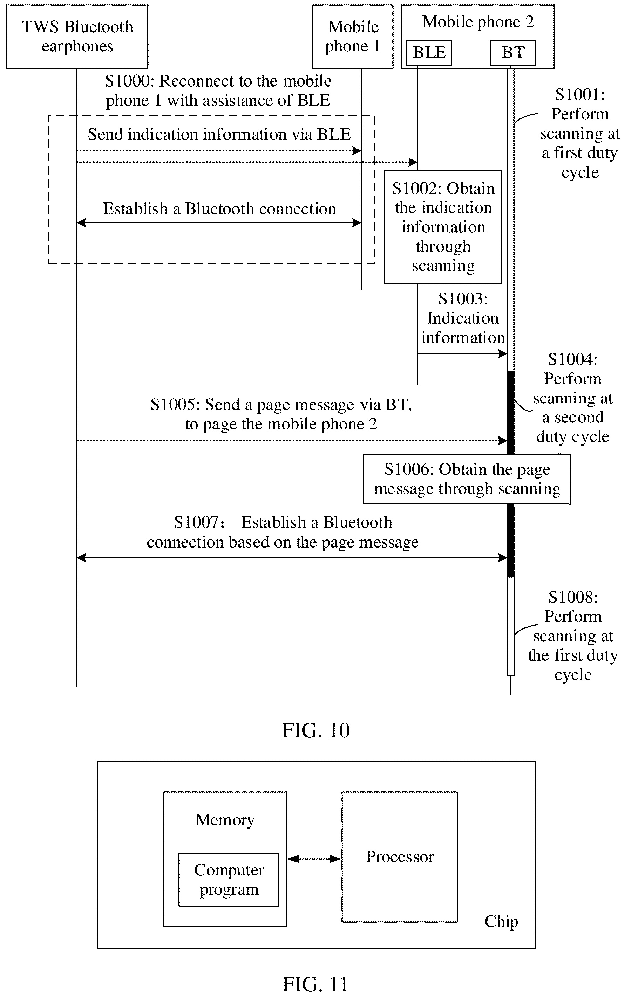

FIG. 10 is a flowchart of a Bluetooth device reconnection method according to still another embodiment of this application. The method relates to a process in which the TWS Bluetooth earphones serially reconnect to the mobile phone 1 and the mobile phone 2, and specifically includes the following steps S1000 to S1008.

S1000: The TWS Bluetooth earphones reconnect to the mobile phone 1 with assistance of BLE.

For a process in which the TWS Bluetooth earphones reconnect to the mobile phone 1, refer to FIG. 8 or FIG. 9. Details are not described herein again.

It should be noted that, in the serial reconnection process, the TWS Bluetooth earphones send indication information to the mobile phone 1 and the mobile phone 2 through BLE advertising, where the indication information may simultaneously indicate the mobile phone 1 and the mobile phone 2 to increase a scanning duty cycle of BT. For example, the indication information may carry unique identification information of both the mobile phone 1 and the mobile phone 2. After receiving the indication information, both the mobile phone 1 and the mobile phone 2 may increase the scanning duty cycle of BT. Alternatively, the indication information carries unique identification information of the TWS Bluetooth earphones. After receiving the indication information and determining that the indication information is from a paired device (for example, the TWS Bluetooth earphones), Bluetooth devices (including the mobile phone 1 and the mobile phone 2) increase the scanning duty cycle of BT based on the indication information.

S1001: The mobile phone 2 performs scanning via BLE and BT, where the scanning duty cycle of BT is a first scanning duty cycle.

S1002 and S 1003: After obtaining the indication information through scanning via BLE, the mobile phone 2 sends the indication information to BT of the mobile phone 2.

S1004: After receiving the indication information via BT, the mobile phone 2 performs scanning at a second duty cycle. The second duty cycle is greater than the first duty cycle.

S1005: The TWS Bluetooth earphones send a page message via BT, where the page message is used to page the mobile phone 2.

S1006 and S1007: After obtaining the page message based on the second duty cycle through scanning via BT, the mobile phone 2 establishes a Bluetooth connection to a primary earphone based on the page message.

S1008: The mobile phone 2 resumes scanning via BT at the first duty cycle.

For specific content of S1002 to S1008, refer to S906 to S911. Details are not described herein again.

In this embodiment, the TWS Bluetooth earphones can simultaneously indicate, through one-time BLE advertising, the two mobile phones to increase the scanning duty cycle of BT, and the mobile phone 2 that is reconnected later can increase the scanning duty cycle of BT before being paged by the TWS Bluetooth earphones, so that a reconnection speed is further increased. Experimental data shows that when the primary earphone serially reconnects to the mobile phone 1 and the mobile phone 2 with assistance of the secondary earphone, an overall reconnection speed of the two devices may be decreased from about existing 2000 ms on average to about 400 ms on average, which displays significant speed increase effect.

It should be noted that the process in which the first Bluetooth device serially reconnects to the two second Bluetooth devices may alternatively be extended to a process in which the first Bluetooth device serially reconnects to three or more second Bluetooth devices. This is not limited in this embodiment.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

Based on a same concept, as an implementation of the foregoing methods, embodiments of this application further provide the following content.

An embodiment of this application further provides a Bluetooth device, including a memory, a processor, and a computer program that is stored in the memory and that is runnable on the processor. When the processor executes the computer program, the method performed by the first Bluetooth device or the second Bluetooth device in the foregoing embodiments is implemented.

An embodiment of this application further provides a chip. Refer to FIG. 11. The chip includes a processor and a memory. The memory stores a computer program. When the computer program is executed by the processor, the method performed by the first Bluetooth device or the second Bluetooth device in the foregoing embodiments is implemented.

An embodiment of this application further provides a computer-readable storage medium. The computer-readable storage medium stores a computer program. When the computer program is executed by a processor, the method performed by the first Bluetooth device or the second Bluetooth device provided in the foregoing embodiments is implemented.

An embodiment of this application further provides a computer program product. The program product includes a computer program. When the computer program is run by an electronic device, the electronic device is enabled to implement the method performed by the first Bluetooth device or the second Bluetooth device provided in the foregoing embodiments.

It should be understood that, the processor mentioned in embodiments of this application may be a central processing unit (central processing unit, CPU), or may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example, but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

In embodiments provided in this application, division into the frameworks or modules is merely logical function division and may be other division during actual implementation. For example, a plurality of frameworks or modules may be combined or integrated into another system, or some features may be ignored or not performed. In addition, functional modules in embodiments of this application may be integrated into one processing module, or each of the modules may exist alone physically, or two or more modules may be integrated into one module. The integrated module may be implemented in a form of hardware, or may be implemented in a form of software functional module.

It may be clearly understood by persons skilled in the art that, for the purpose of convenient and brief description, for detailed working processes of the foregoing system, apparatus, and units, refer to corresponding processes in the foregoing method embodiments. Details are not described herein again.

Reference to "an embodiment", "some embodiments", or the like described in the specification of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "contain", "have", and variants thereof all mean "include but are not limited to", unless otherwise specifically emphasized in another manner.

The foregoing embodiments are merely intended to describe the technical solutions of this application, but are not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions in embodiments of this application, and these modifications and replacements shall fall within the protection scope of this application.

## Claims

1. A Bluetooth communication system, comprising a first Bluetooth device and a second Bluetooth device that have been paired, wherein
the first Bluetooth device is configured to: send indication information via Bluetooth low energy, and send a page message via classic Bluetooth, wherein the indication information is used to indicate the second Bluetooth device to increase a scanning duty cycle of classic Bluetooth, and the page message is used to request to reconnect to the second Bluetooth device; and
the second Bluetooth device is configured to:
perform scanning via Bluetooth low energy, and perform scanning via classic Bluetooth at a first duty cycle;
after obtaining the indication information through scanning via Bluetooth low energy, control scanning via classic Bluetooth at a second duty cycle, wherein the second duty cycle is greater than the first duty cycle; and
after obtaining the page message through scanning via classic Bluetooth, establish a first Bluetooth connection to the first Bluetooth device.

2. The system according to claim 1, wherein that the first Bluetooth device is configured to: send the indication information via Bluetooth low energy, and send the page message via classic Bluetooth comprises:
the first Bluetooth device is configured to:
send the indication information via Bluetooth low energy within preset time in response to a first event; and
send the page message via classic Bluetooth after the preset time expires or response information is received, wherein the response information indicates that the second Bluetooth device has received the indication information.

3. The system according to claim 1, wherein the first Bluetooth device comprises a first Bluetooth module and a second Bluetooth module, and that the first Bluetooth device is configured to: send the indication information via Bluetooth low energy, and send the page message via classic Bluetooth comprises:
the first Bluetooth module is configured to send the page message via classic Bluetooth; and
the second Bluetooth module is configured to send the indication information via Bluetooth low energy.

4. The system according to claim 3, wherein the first Bluetooth module and the second Bluetooth module are further configured to:
establish a second Bluetooth connection between the first Bluetooth module and the second Bluetooth module in response to a first event.

5. The system according to claim 4, wherein
the first Bluetooth module is further configured to indicate, through the second Bluetooth connection, the second Bluetooth module to send the indication information.

6. The system according to any one of claims 3 to 5, wherein the first Bluetooth device is true wireless stereo TWS earphones, the TWS earphones comprise a primary earphone and a secondary earphone, the primary earphone comprises the first Bluetooth module, and the secondary earphone comprises the second Bluetooth module.

7. The system according to claim 2, 4, or 5, wherein the first event is:
successfully enabling a Bluetooth function of the first Bluetooth device; or
after the Bluetooth connection between the first Bluetooth device and the second Bluetooth device is disconnected, determining that the Bluetooth connection needs to be re-established.

8. The system according to any one of claims 1 to 7, wherein the second Bluetooth device is further configured to: after successfully establishing the first Bluetooth connection, resume scanning via classic Bluetooth of the second Bluetooth device at the first duty cycle.

9. The system according to any one of claims 1 to 8, wherein the second duty cycle is 11.25 ms/37.5 ms, wherein 11.25 ms is a scan time window, and 37.5 ms is a scan time interval.

10. A Bluetooth device reconnection method, applied to a first Bluetooth device and a second Bluetooth device that have been paired, wherein the method comprises:
sending, by the first Bluetooth device, indication information via Bluetooth low energy, and sending a page message via classic Bluetooth, wherein the indication information is used to indicate the second Bluetooth device to increase a scanning duty cycle of classic Bluetooth, and the page message is used to request to reconnect to the second Bluetooth device;
performing, by the second Bluetooth device, scanning via Bluetooth low energy, and performing scanning via classic Bluetooth at a first duty cycle;
after obtaining the indication information through scanning via Bluetooth low energy, performing, by the second Bluetooth device, scanning via classic Bluetooth at a second duty cycle, wherein the second duty cycle is greater than the first duty cycle; and
after obtaining the page message through scanning via classic Bluetooth, establishing, by the second Bluetooth device, a first Bluetooth connection to the first Bluetooth device.

11. The method according to claim 10, wherein sending, by the first Bluetooth device, the indication information via Bluetooth low energy, and sending the page message via classic Bluetooth comprises:
sending, by the first Bluetooth device, the indication information within preset time in response to a first event; and
sending, by the first Bluetooth device, the page message after the preset time expires or response information is received, wherein the response information indicates that the second Bluetooth device has received the indication information.

12. The method according to claim 10, wherein the first Bluetooth device comprises a first Bluetooth module and a second Bluetooth module, and correspondingly, sending, by the first Bluetooth device, the indication information via Bluetooth low energy, and sending the page message via classic Bluetooth comprises:
sending, by the first Bluetooth module, the page message via classic Bluetooth; and
sending, by the second Bluetooth module, the indication information via Bluetooth low energy.

13. The method according to claim 12, wherein the method further comprises:
establishing a second Bluetooth connection between the first Bluetooth module and the second Bluetooth module in response to a first event.

14. The method according to claim 13, wherein the method further comprises:
indicating, by the first Bluetooth module through the second Bluetooth connection, the second Bluetooth module to send the indication information.

15. The method according to any one of claims 12 to 14, wherein the first Bluetooth device is true wireless stereo TWS earphones, the TWS earphones comprise a primary earphone and a secondary earphone, the primary earphone comprises the first Bluetooth module, and the secondary earphone comprises the second Bluetooth module.

16. The method according to claim 11, 13, or 14, wherein the first event is:
successfully enabling a Bluetooth function of the first Bluetooth device; or
after the Bluetooth connection between the first Bluetooth device and the second Bluetooth device is disconnected, determining that the Bluetooth connection needs to be re-established.

17. The method according to any one of claims 10 to 16, wherein the method further comprises:
after successfully establishing the first Bluetooth connection, resuming, by the second Bluetooth device, scanning via classic Bluetooth at the first duty cycle.

18. The method according to any one of claims 10 to 17, wherein the second duty cycle is 11.25 ms/37.5 ms, wherein 11.25 ms is a scan time window, and 37.5 ms is a scan time interval.

19. A Bluetooth device, comprising a memory, a processor, and a computer program that is stored in the memory and that is runnable on the processor, wherein when the processor executes the computer program, the method performed by the first Bluetooth device or the second Bluetooth device according to any one of claims 10 to 18 is implemented.

20. A computer-readable storage medium, wherein the computer-readable storage medium stores a computer program, and when the computer program is executed by a processor, the method performed by the first Bluetooth device or the second Bluetooth device according to any one of claims 10 to 18 is implemented.

21. A chip, wherein the chip comprises a processor and a memory, the memory stores a computer program, and when the computer program is executed by the processor, the method performed by the first Bluetooth device or the second Bluetooth device according to any one of claims 10 to 18 is implemented.
